# EUROPÄISCHE PATENTANMELDUNG

(11) **EP 4 462 199 A1**
(43) Veröffentlichungstag der Anmeldung: **13.11.2024**
(21) Anmeldenummer: 23173139.9
(22) Anmeldetag: 12.05.2023
(51) Int. Cl.: G05B 17/02

(54) **VERFAHREN UND EINRICHTUNG ZUM OPTIMIEREN EINES DIGITALEN ZWILLINGS HINSICHTLICH SEINER ROBUSTHEIT**

(71) Anmelder: Siemens Aktiengesellschaft, 80333 München (DE)
(72) Erfinder: Günther, Erich, 91056 Erlangen (DE); Neugebauer, Christian, 90419 Nürnberg (DE); Seeger, Guido, 91083 Baiersdorf (DE); Tauchmann, Sven, 09127 Chemnitz (DE)
(74) Vertreter: Siemens Patent Attorneys

(57) **Zusammenfassung**

Optimieren eines Systemzwillings (101) hinsichtlich seiner Robustheit, wobei der Systemzwilling (101) ein Verhaltensmodell (104) umfasst, welches sowohl ein ungestörtes Verhalten als auch ein Verhalten des Systems (102) beschreibt, welches unter Einfluss einer oder mehr vordefinierten Störungen (105, 107, 108) zu erwarten ist, wobei bei dem Verfahren ein Modell einer Umgebung (113) bereitgestellt wird, wobei das System (102) dazu ausgebildet ist, mit der Umgebung (113) derart zu interagieren, dass die Umgebung (113) zumindest ein Eingangssignal (106) dem System (102) zuführt und zumindest ein Ausgangssignal (109) von dem System (102) empfängt, wobei das System (102) mit der Umgebung (113) gemeinsam ein Gesamtsystem (115) bilden, der Systemzwilling (101) und das Umgebungsmodell (114) zu einem Gesamtmodell (116) verknüpft werden, das Gesamtmodell (116) mindestens zweimal ausgeführt wird, um Simulationsdaten (119) zu erhalten, wobei bei einem ersten Ausführen das Gesamtmodell (116) in einem ungestörten Zustand herangezogen wird und bei einem zweiten Ausführen des Gesamtmodells (116) zumindest eine Störung (105, 107, 108) des Systems (102) mitsimuliert wird, um das Verhalten des Gesamtsystems (115) unter Einfluss der auf das System (102) wirkenden Störung (105, 107, 108) zu simulieren, Simulationsdaten (119) analysiert werden, um eine zu erwartende Wirkung (121) der zumindest einen Störung (105, 107, 108) auf das Gesamtsystem (115) aus einem Vergleich von bei dem ersten Ausführen des Gesamtmodells (116) ermittelten Daten mit bei dem zweiten Ausführen des Gesamtmodells (116) ermittelten Daten zu ermitteln, abhängig von der zu erwartenden Wirkung (121) zumindest eine Handlung ermittelt und an einen Benutzer kommuniziert wird.

## Beschreibung

Die vorliegende Offenbarung betrifft ein computergestütztes Verfahren, eine Einrichtung und ein Computerprogrammprodukt, bei welchen ein bereits vorliegender digitaler Zwilling eines Antriebssystems hinsichtlich seiner Robustheit optimiert wird und Verwenden eines solchen digitalen Zwillings zum Auslegen eines Antriebssystems.

Es besteht im Rahmen der Designphase und auch im Betrieb eines Systems die Fragestellung nach einer Untersuchung der Robustheit dieses Systems und der darin enthaltenen Objekte. Ziel einer solchen Untersuchung ist das Einschätzen des Risikos und der damit einhergehenden Kosten.

Die klassische Projektierung eines komplexen Systems ist üblicherweise hinsichtlich Robustheit unzureichend definiert und muss in einem separaten Prozess abgesichert werden.

Um diesem Problem zu begegnen, wird ein computergestütztes Verfahren der oben genannten Art vorgeschlagen, bei welchem ein digitaler Zwilling eines Systems - ein Systemzwilling - hinsichtlich seiner Robustheit optimiert wird und somit resilienter, insbesondere widerstandsfähiger beziehungsweise robuster wird. Der Systemzwilling umfasst ein Verhaltensmodell, welches sowohl ein ungestörtes Verhalten als auch ein Verhalten des Systems beschreibt, welches unter Einfluss einer oder mehr vordefinierten Störungen zu erwarten ist. Die Störungen treten dabei vorzugsweise mit einer gewissen Wahrscheinlichkeit im realen Produktionszyklus auf und können beispielsweise durch Aufschaltung einer Störgröße, einer Störfunktion im Systemzwilling, Deaktivieren einer Komponente im Systemzwilling, weil sie im realen Produktionszyklus versagt und ausfällt, etc. simuliert werden.

Bei dem Verfahren wird ein Modell einer Umgebung - ein Umgebungsmodell - bereitgestellt. Das System ist dazu ausgebildet, mit der Umgebung derart zu interagieren, dass die Umgebung zumindest ein Eingangssignal (vorzugsweise alle Eingangssignale) dem System zuführt und zumindest ein Ausgangssignal (vorzugsweise alle Eingangssignale) von dem System empfängt, wobei das System mit der Umgebung gemeinsam ein Gesamtsystem bilden. Der Systemzwilling und das Umgebungsmodell werden (beispielsweise in einem Simulationstool) zu einem Gesamtmodell - einem Modell des Gesamtsystems - verknüpft. Das Gesamtmodell wird mindestens zweimal ausgeführt, um Simulationsdaten zu erhalten, wobei bei einem ersten Ausführen das Gesamtmodell in einem ungestörten Zustand herangezogen wird und bei einem zweiten Ausführen des Gesamtmodells zumindest eine Störung (Störverhalten / Reaktion des realen Systems, Verhalten auf eine interne und/oder externe Störung) des Systems mitsimuliert wird, um das Verhalten des Gesamtsystems unter Einfluss der auf das System wirkenden Störung zu simulieren. Die Simulationsdaten werden analysiert, um eine zu erwartende Wirkung der zumindest einen Störung auf das Gesamtsystem aus einem Vergleich von bei dem ersten Ausführen des Gesamtmodells ermittelten Daten mit bei dem zweiten Ausführen des Gesamtmodells ermittelten Daten zu ermitteln. Anschließend wird abhängig von der zu erwartenden Wirkung zumindest eine Handlung ermittelt und an einen Benutzer kommuniziert.

Im Kontext der vorliegenden Offenbarung wird unter Simulation die Ausführung eines Modells in einer bestimmten Konfiguration und Parametrierung verstanden. Eine oder mehr Simulationen mit dem gleichen Modell aber mit verschiedenen Konfigurationen und/oder Parametrierungen bildet einen Simulation-Set.

Zusammenfassend ist ein Ruggedizing-Verfahren für einen digital Twin offenbart, bei welchem die Resilienz, insbesondere die Robustheit des digitalen Zwillings hinsichtlich aus dem realen Produktionszyklus bekannter, im Produktionszyklus mit einer bestimmten Häufigkeit vorkommender Störungen erhöht wird.

Bei einer Ausführungsform kann es vorgesehen sein, dass beim Ermitteln der zumindest einen Handlung eine durch die zu erwartende Wirkung der zumindest einen Störung auf das Gesamtsystem zu erwartenden Situation bestimmt wird und eine Bewertung der Situation durchgeführt wird. Vorzugsweise wird dabei eine risikobasierte Bewertung der Situation in dem Gesamtmodell vorgenommen, um anhand des ermittelten Risikos die Anzahl der relevanten Fehlerszenarien zu verringern die Berechnungszeit zu reduzieren. Beispielsweise kann dabei die Gefährlichkeit der entstehenden Gesamtsituation zur Bewertung herangezogen werden.

Bei einer Ausführungsform kann ein dritter Simulationsablauf vorgesehen sein, durch welchen die zu erwartende Wirkung quantifiziert wird.

Bei einer Ausführungsform kann es vorgesehen sein, dass die zumindest eine Handlung hinsichtlich vorgebbarer Parameter bewertet wird. Es kann zweckdienlich sein, das Ergebnis dieses Bewertens an den Benutzer zu kommunizieren. Die Parameter können Kosten, Aufwand, Risiken aus einer Unterlassung der Handlung und so weiter sein.

Bei einer Ausführungsform kann es vorgesehen sein, dass zwei oder mehr Störungen des Systems mitsimuliert werden, um das Verhalten des Gesamtsystems unter Einfluss der auf das System wirkenden zwei oder mehr Störungen zu simulieren und Simulationsdaten zu mehreren Störszenarien zu erhalten.

Dabei kann es zweckmäßig sein, wenn die zu erwartende Wirkung für jedes Störszenario ermittelt wird und zumindest eine Handlung für eine oder mehr der zu erwarteten Wirkungen ermittelt und an den Benutzer kommuniziert wird.

Eine Handlung kann also mehrere Störszenarien gleichzeitig betreffen.

Bei einer Ausführungsform kann es vorgesehen sein, dass die zumindest eine Handlung am Gesamtmodell validiert wird. beispielsweise wird dabei die Handlung in dem Gesamtmodell implementiert und das Gesamtmodell mindestens zwei Mal simuliert - ohne und mit Störung(en), wobei es sich versteht, dass die Störung(en) dieselbe(n) ist(sind), die beim Ermitteln der zumindest einen Handlung simuliert wurde(n). Die dabei ermittelte zu erwartende Wirkung kann vorzugsweise bewertet, beispielsweise risikobasiert bewertet. Auch kann ein Ranking der Handlungen nach verschiedenen Parametern, wie Kosten, Aufwand, Effizienz und so weiter vorgenommen werden.

Jede Störung beziehungsweise jedes Störszenario kann eine Störung der drei folgenden Störarten sein oder, im Fall eines Störungsszenarios, eine Kombination der Störungen dieser Stör- beziehungsweise Störungsarten beinhalten:
- Störung auf einem Input beziehungsweise Eingangssignal (resultiert auch aus einer Störung des Umgebungsmodells, auch Rauschen);
- Störung als eigener "nicht-funktionaler" Eingang (beispielsweise Strahlung, Temperatur);
- Störung als eigener logischer Input (eine Komponente fällt aus) .

Bei einer Ausführungsform kann es vorgesehen sein, dass die zu erwartende Wirkung einen oder mehr Fehler innerhalb des Gesamtsystems umfasst - also dass die Störung(en) zu einem oder mehreren Fehlern führen. In diesem Fall kann von Fehlerszenarien gesprochen werden.

Bei einer Ausführungsform kann es vorgesehen sein, dass die Handlung ein derartiges Verändern des Verhaltensmodells des Systemzwillings umfasst, dass die zu erwartende Wirkung vermindert wird.

Das Verändern des Verhaltensmodells kann eine oder mehr Abhilfemaßnahmen zur Verminderung der zu erwartenden Störwirkung beziehungsweise des Störeinflusses umfassen.

Vorzugsweise kann das Vermindern der zu erwartenden Wirkung durch eine zumindest teilweise Kompensation beziehungsweise durch einen zumindest teilweisen Ausgleich des Einflusses der Störung(en) oder eine Behebung des einen oder mehr Fehler erfolgen.

Bei der Frage der Implementierung einer bestimmten Kompensation kann dabei einer der nachfolgenden Faktoren oder eine Kombination davon berücksichtigt werden: Risikoabschätzung von Impact, Kosten und Wahrscheinlichkeit. Eine Risikobewertung erfolgt dabei vorzugsweise anhand von einem oder mehr Punkten, z.B. Wahrscheinlichkeit, Folgen, Kosten der Schadensbegrenzung oder gar Behebung.

Eine mögliche Kompensation könnte beispielsweise eine Überwachung umfassen, die das Versagen eines Elements des Zwillings detektiert und in Reaktion darauf in einen robusteren Zustand übergeht, in dem "nichts schlimmes passiert".

Wenn die Störung beispielsweise Folgestörungen verursacht, wird im Systemzwilling vorzugsweise die Störung selbst aber auch ihre Folgen - eine Störungskaskade - simuliert.

Mit anderen Worten wird der Systemzwilling mit Daten angereichert, die unter Verwendung einer Störungssimulation generiert werden, wodurch der Systemzwilling um für das Anwendungsszenario (Umgebung) relevante Robustheitsaspekte erweitert wird.

Die Güte einer Aussage über die Robustheit eines komplexen Systems wird durch die vorgeschlagene höher und umfassender.

Das System ist vorzugsweise ein Antriebssystem.

Vorzugsweise umfasst ein Antriebssystem eine elektronische Regelungseinheit, beispielsweise einen Umrichter, insbesondere einen Frequenzumrichter, insbesondere ist das System als eine Regelungseinheit, beispielsweise als ein Umrichter, insbesondere als ein Frequenzumrichter ausgebildet.

Als Umgebung kommen dabei beispielsweise DC-Applikationen in Frage. So kann die Umgebung beispielsweise einen oder eine Kombination von (großen) vermaschten Zwischenkreisen, Batterieapplikationen, DC-Schaltern und Sicherungen umfassen.

Bei einer Ausführungsform kann es vorgesehen sein, dass das Antriebssystem zusätzlich eine elektrische rotatorische Maschine, vorzugsweise einen Elektromotor, beispielsweise einen Asynchronmotor umfasst.

Dabei kann die elektronische Regelungseinheit mit der elektrischen rotatorischen Maschine verbunden sein, um diese mit Strom und Spannung mit bestimmten einstellbaren Charakteristika (Amplitude, Frequenz, etc.) zu versorgen und dadurch beispielsweise ihr Drehmoment auf das erforderliche Niveau zu reduzieren oder zu erhöhen, um die Anforderungen der Anwendung zu erfüllen.

Solche Antriebssysteme können beispielsweise Achsen einer Werkzeugmaschine oder eines Roboterarms, Pumpen (Hydraulikantrieb), Förderbänder, etc. antreiben, weshalb sie oft auch als Antriebe oder Antriebsstränge bezeichnet werden.

Ein digitaler Zwilling eines Systems ist grundsätzlich eine virtuelle Repräsentation des realen Systems, welche vorzugsweise anhand von Daten aus verschiedenen Datenquellen, wie beispielsweise historischen Daten, Messdaten, usw. aktualisiert werden kann. Zunächst kann ein digitaler Zwilling insbesondere aus statischen Daten (Typenschilder, Katalogangaben, Herstellerdatenblätter und/oder -kennlinien, usw.) gebildet und anschließend, beispielsweise im Betrieb aktualisiert werden. Ein aus den statischen Daten gebildeter digitaler Zwilling kann insbesondere in der Designphase verwendet werden.

Mit anderen Worten ist ein digitaler Zwilling eine Nachbildung eines physikalischen Objekts eines physikalischen Systems in Software, welche insbesondere ein Eingangs-Ausgangs-Verhalten und/oder die innere Funktion nachbildet (z.B. mittels einer Übertragungsfunktion) und ermöglicht innere Parameter (z.B. Schaltgeschwindigkeit, max. Frequenz) des Systems anzupassen, ohne am realen System Änderungen vornehmen zu müssen.

Zweckdienlich ist es, wenn ein digitaler Zwilling in Echtzeit, z.B. während des Betriebs, anhand von Sensordaten aktualisiert werden kann, die die dem System zugeordneten Sensoren liefern.

Die historischen Daten können z.B. Betriebsdaten, Konstruktionszeichnungen und Modellen, Wartungshistorien und anderen Informationen, die im Laufe der Lebensdauer des Antriebssystems gesammelt wurden, umfassen.

Der digitale Zwilling kann eine Vielzahl von Funktionen bieten, wie z.B. Überwachung, Simulation und Vorhersage von Leistung und Zustand des Systems. Es kann auch als digitales Modell für die Optimierung von Wartungsprozessen und die Verbesserung der Leistung dienen. Darüber hinaus kann es auch dazu beitragen, Ausfallzeiten und Wartungskosten zu reduzieren, indem es potenzielle Probleme frühzeitig erkennt und entsprechende Maßnahmen empfiehlt. Es kann auch die Effizienz des Systems verbessern, indem es optimale Betriebsbedingungen vorschlägt und die Leistung im Laufe der Zeit überwacht.

Insgesamt bietet ein digitaler Zwilling des Systems eine leistungsstarke Möglichkeit, die Leistung und Effizienz des Antriebssystems zu optimieren und gleichzeitig die Wartungskosten zu senken. Insbesondere kann ein digitaler Zwilling ermöglichen, Fehlerexperimente durchzuführen und/oder physikalisches Design zu verbessern, ohne dass man am realen System experimentiert.

Insbesondere wird unter dem digitalen Zwilling (zu engl.: digital twin) eines Systems im Rahmen der vorliegenden Offenbarung ein Simulationsmodell des Systems verstanden. Ein solches Simulationsmodell kann beispielsweise in Form eines FMU-Modells (FMU = Functional Mock-up Unit) vorliegen. Das Simulationsmodell kann modular aufgebaut sein, wobei jedes Modul des Simulationsmodells eine bestimmte Domäne des Antriebssystems beschreibt (Thermik, Elektrik, usw.)

Die FMUs können über sogenannte Functional Mock-up Interfaces oder kurz FMIs miteinander verknüpft werden. FMI ist eine Standard-Schnittstelle für den Austausch von modellbasierten Simulationen zwischen verschiedenen Simulationswerkzeugen und -umgebungen. Mit anderen Worten ist die FMU ist eine Manifestation des FMI-Standards.

Der Systemzwilling und das Umgebungsmodell können auch als Module des Gesamtmodells, das beispielsweise als eine Software implementiert sein kann, ausgebildet sein und in diesem Gesamtmodell verknüpft werden. Die Verknüpfung kann beispielsweise über eine Bedienerschnittstelle des Gesamtmodells konfiguriert werden. Dabei müssen der Systemzwilling und das Umgebungsmodells nicht als eingeständig verwaltbare Komponenten, wie beispielsweise FMUs, ausgebildet sein. Die Verknüpfung muss daher nicht dem FMI-Standard entsprechen.

FMI definiert ein standardisiertes Datenformat für modellbasierte Simulationen, das beispielsweise auf XML- und Binärdateien basieren kann. Es ermöglicht einen Austausch von Modellkomponenten und deren Verbindungen zwischen verschiedenen Simulationsumgebungen und -Tools. Es ermöglicht Erstellen von komplexen Systemen aus verschiedenen Komponenten und Modellen, die in verschiedenen Simulationsumgebungen und -Tools eingebettet werden können.

Bei einer Ausführungsform kann es vorgesehen sein, dass basierend auf dem geänderten Verhaltensmodell zumindest eine entsprechende Änderung des Systems vorgeschlagen und vorzugsweise vorgenommen wird. Es kann zweckmäßig sein, vor dem Übernehmen eines Änderungsvorschlags eine Risikoanalyse durchzuführen.

Bei einer Ausführungsform kann es vorgesehen sein, dass, wenn die zu erwartende Wirkung einen oder mehr Fehler innerhalb des Gesamtsystems umfasst, zumindest eine Lösung innerhalb des Systemzwillings ermittelt wird, wobei die zumindest eine Lösung den einen oder mehr Fehler zumindest vermindert und vorzugsweise teilweise kompensiert beziehungsweise ausgleicht.

Bei einer Ausführungsform kann es vorgesehen sein, dass
- das Gesamtmodell derart geändert wird, dass es das Umgebungsmodell und den Systemzwilling mit dem geänderten Verhaltensmodell umfasst,
- das geänderte Gesamtmodell ausgeführt wird, wobei beim Ausführen des geänderten Gesamtmodells die(selbe) Störung des Systems mitsimuliert wird, und dadurch erhaltene, geänderte Simulationsergebnisse an dem Gesamtsystem validiert werden.

Dabei kann es zweckmäßig sein, wenn beim Validieren ein Ranking der an dem Verhaltensmodell des Systemzwillings vorgenommenen Änderung durchgeführt wird.

Vorzugsweise umfasst das Ranking eine Gewichtung hinsichtlich einer Effizienz der Änderung beziehungsweise der vorgenommenen Abhilfemaßnahme und/oder des Aufwands einer Umsetzung der Änderung an dem System und/oder der Kosten einer Umsetzung der Änderung an dem System.

Bei einer Ausführungsform kann es vorgesehen sein, dass beim Systemzwilling den vordefinierten Störungen korrespondierende Störeingänge vorgesehen sind.

Bei einer Ausführungsform kann es vorgesehen sein, dass beim Analysieren der Simulationsdaten eine risikobasierte Bewertung einer durch zu erwartende Wirkung der zumindest einen Störung auf das Gesamtsystem zu erwartenden Situation durchgeführt wird und beispielsweise an einen Benutzer gemeldet wird.

Dies kann auf Basis der sicherheitsrelevanten Parameter und/oder des zu erwartenden Zustandes des Gesamtsystems o.Ä. durchgeführt werden.

Vorzugsweise umfasst die Bewertung eine Beurteilung hinsichtlich Gefährlichkeit bzw. Kritikalität der durch die zu erwartende Wirkung der zumindest einen Störung auf das Gesamtsystem zu erwartenden Situation umfasst.

Bei einer Ausführungsform kann es vorgesehen sein, dass beim Analysieren der Simulationsdaten eine Simulation des Gesamtsystems in einem ungestörten Zustand herangezogen wird. Dabei wird das reale System in der Umgebung sowohl in dem ungestörten Zustand als auch unter Einfluss der zumindest einen Störung simuliert. Ergebnisse der Simulation des Systems ohne Störung werden mit den Ergebnissen der Simulation des Systems unter Einfluss der Störung dabei verglichen und analysiert.

Bei einer Ausführungsform kann es vorgesehen sein, dass zwei oder mehr Störungen mitsimuliert werden, um das Verhalten des Gesamtsystems unter Einfluss der auf das System wirkenden zwei oder mehr Störungen zu simulieren und Simulationsdaten zu erhalten.

Die Störungen können dabei unterschiedlicher oder gleicher Art sein beziehungsweise nach den unterschiedlichen oder nach den gleichen Störmechanismen ablaufen. D.h. es können z.B. zwei Störungen simuliert werden, bei welchen zwei Komponenten ausfallen oder zwei unterschiedliche Störungen auf das Eingangssignal aufgeschaltet werden. Dies sind unterschiedliche Störszenarien, die im Gesamtmodell simuliert werden können.

Bei einer Ausführungsform umfasst das Verfahren
- eine Simulation des ungestörten Gesamtmodells,
- eine Simulation des Gesamtmodells unter Berücksichtigung einer oder mehr Störungen - einfach oder k-fach gestörte Simulation, wobei k der Anzahl der simulierten Störungen ist, wobei jede Störung einem bestimmten Störmechanismus zugeordnet werden kann,
- eine anschließende vorzugsweise risikobasierte Bewertung der zu erwartenden Wirkung der Störung(en),
- ein Vorschlagen einer oder mehr Abhilfemaßnamen, die beispielsweise das Verhaltensmodell betreffen, wobei die Anzahl der Abhilfemaßnahmen kleiner als die Anzahl der Störungen sein kann,
- eine Simulation des Gesamtmodells unter Berücksichtigung der Störung(en) und der Abhilfemaßnahme(n),
- eine Bewertung der Abhilfemaßnahme(n), wobei dabei eine Begründung zu der(den) Abhilfemaßnahme(n), vorzugsweise mit Angabe einer Gewichtung (nach Kosten, Aufwand ...) beispielsweise seitens Anwenders generiert werden kann.

Bei einer vorgenommenen Änderung des Verhaltensmodells wird der Benutzer vorzugsweise darauf hingewiesen, dass es jetzt ein robusterer digital Twin vorliegt und dass entsprechende Änderungen an dem realen Antriebssystem nachgezogen werden sollen.

Zusammenfassend ermöglicht das hier offenbarte Verfahren unter anderem Fehler in den Objekten selbst abzubilden und somit einen vollumfänglich - also in jeder seiner Komponente - robustheitsaspektszentrierten Systemzwilling zu schaffen.

Auf Basis dieser Erkenntnisse lassen sich neben Designentscheidungen (Dimensionierung der Objekte, Sicherheitsfaktoren), auch Überwachungs- und Fehlerbeherrschungsalgorithmen entwickeln oder Maßnahmen (Redundanz...) ableiten.

Die Erfindung wird nachfolgend anhand von Ausführungsbeispielen näher erläutert. Dabei zeigen:

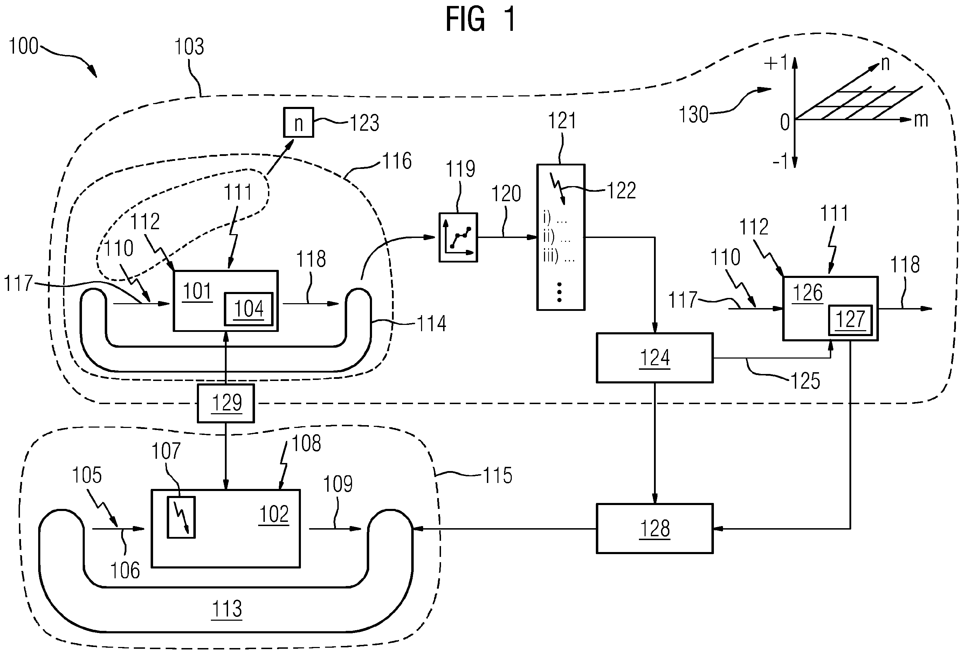

FIG 1 zeigt eine Einrichtung 100 zum Weiterbilden eines digitalen Zwillings.

Die in den Figuren verwendete Bezugszeichen dienen ausschließlich zur Verbesserung der Lesbarkeit und sind nicht als einschränkend auszulegen. Die gleichen Bezugszeichen in unterschiedlichen Figuren bezeichnen im Wesentlichen gleiche Elemente beziehungsweise Gegenstände.

FIG 1 zeigt eine Einrichtung 100 zum Optimieren und Weiterbilden eines digitalen Zwillings 101 eines (realen) Antriebs 102 - eines Antriebszwillings - und veranschaulicht ein computergestütztes Verfahren, um den Antriebszwilling 101 zu optimieren und anhand der erfolgten Optimierung weiterzubilden.

In einer vorteilhaften Ausführung kann der Antriebszwilling 101 und vorzugsweise jede seiner Komponenten und/oder Modelle (mechanisches, thermisches, elektrisches Modell usw.), die als Module eines Softwareprogramms ausgebildet sein können, hinsichtlich ihres Detaillierungsgrades konfigurierbar sein.

Eine solche Einrichtung 100 und ein solches Verfahren können beispielsweise im Rahmen einer Designphase oder einer Auslegung des Antriebs 102 zum Einsatz kommen, bei welcher die Robustheit des Antriebs 102 beziehungsweise seiner Projektierung und der darin enthaltenen Objekte untersucht wird. Das Ziel einer solchen Untersuchung kann beispielsweise das Einschätzen des Risikos und auch der damit einhergehenden Kosten sein und Ermittlung von Belastungsgrenzen und/oder Bruchpunkten von Komponenten des Antriebs 102 umfassen.

Die Einrichtung 100 umfasst ein Rechensystem 103, welches beispielsweise als eine oder mehrere beispielsweise verteilte Recheneinheiten oder -plattformen ausgebildet sein kann (hier nicht gezeigt). Beispielsweise kann das Rechensystem 103 als eine Cloud ausgebildet sein. Grundsätzlich umfasst ein solches Rechensystem miteinander operativ gekoppelten Mitteln zum Durchführen der notwendigen Schritte des hier dargestellten Verfahrens, wie Datenbanken, -speicher, Prozessoren, Datenleitungen etc.

In der Einrichtung 100 ist der Antriebszwilling 101 gespeichert. Der Antriebszwilling 101 umfasst ein Verhaltensmodell 104, welches sowohl ein ungestörtes Verhalten als auch ein Verhalten des Antriebs 102 beschreibt, welches unter Einfluss einer oder mehr vordefinierten Störungen, welche mit einer nicht vernachlässigbaren Wahrscheinlichkeit im Betrieb des Antriebs 102 auftreten, zu erwarten ist.

Eine Störung kann beispielsweise als eine Störung 105 am Eingangssignal 106 und/oder als eine interne Störung 107 und/oder als eine externe Störung 108 auftreten.

Die Störung ist insofern definiert, als sie vorzugsweise direkt messbar ist. Mit anderen Worten werden im Kontext der vorliegenden Offenbarung grundsätzlich bekannte Störeinflüsse betrachtet.

Die internen Störungen 107 umfassen beispielsweise Fehler, die in einem echten Bauteil des Antriebs 102 (Kurzschluss, Wellenbruch, Lötstellenprobleme, versagender Halbleiter, die die Input-Output-Übertragungsfunktion beeinträchtigen und von außen nicht sichtbar sind) vorkommen können.

Auch externe Stimuli des Antriebs 102 können im Betrieb fehlerhaft sein (z.B. Sollwert und/oder Umgebungstemperatur ist außerhalb des gültigen Bereichs; Security Breaches, wenn z.B. das Eingangssignal kompromittiert wurde, ist passiert) und die Reaktion darauf kann untersucht werden.

Die Störungen 105 am Eingangssignal 106 können beispielsweise Rauschen umfassen. Störungen dieser Art sind am Output / Ausgangssignal 109 sichtbar.

Alternativ oder zusätzlich können Störungen auch Störungen auf einem Seitenkanal (Einstrahlung, Vibration auf dem Gehäuse) umfassen.

Mit anderen Worten ermöglicht der Antriebszwilling 101 eine der vorgenannten Störungen 105, 107, 108 oder eine Kombination davon zu simulieren. Diese Simulation kann beispielsweise darin bestehen, dass eine oder mehr Störfunktionen 110, 111 aufgeschaltet werden, oder eine Komponente des Antriebszwillings 101 (die einer realen Komponente des Antriebs 102 korrespondiert) gelöscht bzw. deaktiviert wird 112, weil dies einem Versagen der realen Komponente entspricht. Dies können beispielsweise Teil- oder Komplettausfälle in einem Motor, in einem Geber, in der Sensorik, in der Leistungselektronik. Konkret kann mit dem Verhaltensmodell 104 beispielsweise ein IGBT-Ausfall (IGBT ist engl. für Insulated-Gate Bipolar Transistor), der mit einer dazugehörigen Wahrscheinlichkeit in Abhängigkeit von Lastspielen (*"*Zyklen-zähler*"*) auftritt, simuliert werden.

Zusammenfassend sind in dem Antriebszwilling 101 drei Störmechanismen oder eine Kombination davon simulierbar:
- Störung auf einem Input (resultiert auch aus einer Störung des Umgebungsmodells, auch Rauschen);
- Störung als eigener "nicht-funktionaler" Eingang (beispielsweise Strahlung, Temperatur);
- Störung als eigener logischer Input (Komponente fällt aus).

Deshalb kann es vorgesehen sein, dass der ganze Antriebszwilling 101 und/oder eine oder mehrere seiner Komponenten mit Ausfallwahrscheinlichkeiten versehen sind. Dabei sind die Ausfallwahrscheinlichkeiten üblicherweise eigene statische Parameter und kein zeitabhängiger Input.

Mit Hilfe der Ausfallwahrscheinlichkeiten ist es beispielsweise möglich, ein einer FMEA äquivalentes Ergebnis zu erzielen (bspw. Bewertung der Schwachstellen und Kritikalität der Komponenten eines Systems).

Außerdem kann es vorgesehen sein, dass in dem Antriebszwilling zusätzlich Störgrößenübertragungsfunktionen abgebildet sind.

Darüber hinaus ist in dem Rechensystem 103 ein Modell einer Umgebung 113 - ein Umgebungsmodell 114 - gespeichert, in der der Antrieb 102 angewendet beziehungsweise eingesetzt wird beziehungsweise würde. Mit anderen Worten korrespondiert die Umgebung 113 dem Anwendungsszenario des Antriebs 102.

Der Antrieb 102 ist also dazu ausgebildet, mit der Umgebung derart zu interagieren, dass die Umgebung 113 zumindest ein, vorzugsweise alle) Eingangssignale 106 dem Antrieb 102 zuführt und zumindest ein, vorzugsweise alle Ausgangssignale 109 von dem Antrieb 102 erhält. Gemeinsam mit der Umgebung 113 bildet somit der Antrieb 102 ein Gesamtsystem 115.

Die Umgebung 113 des Antriebs 102 kann unterschiedlich ausgebildet sein. Beispielsweise kann die Umgebung 113 als ein großes vermaschtes DC-Netz ausgebildet sein, bei welchem beispielsweise ein DC-Link kurzschließen oder eine Sicherung durch legieren kann.

Außerdem kann die Umgebung 113 als eine überlagerte Steuerung des Antriebs 102 ausgebildet sein und eine oder mehr speicherprogrammierbaren Steuerungen (SPS) umfassen. Auf die nachstehend beschriebene Weise kann beispielsweise das Regelungsdesign innerhalb des Antriebs 102 mit Hilfe des Antriebszwillings 101 hinsichtlich seiner Robustheit verbessern.

Der Antriebszwilling 101 kann beispielsweise als FMU ausgeführt sein.

Für die Störungssimulation 110, 111, 112 können im Antriebszwilling 101 Störeingänge vorgesehen sein. Jeder Störeingang korrespondiert einer der Störungen 110, 111, 112. Mit anderen Worten können im Antriebszwilling 101 Schnittstellen vorgesehen sein, um im Antriebszwilling 101 enthaltene potenzielle Fehlerereignisse auszulösen. Über Störeingänge/Schnittstellen können den Störeingängen/Schnittstellen korrespondierende Parameter und vorzugsweise auch deren Toleranzen eingestellt werden.

Wenn der Antriebszwilling 101 mehrere Modelle umfasst, kann jedes Modell eigene Schnittstellen umfassen. Bei einer Kopplung / Aggregation von mehreren Modellen zu einem größeren Antriebszwilling 101 werden die Außenschnittstellen (der Modelle) automatisch zu inneren Schnittstellen, über die Ausbreitung der entsprechenden Störung 105, 107, 108 und/oder der Folgefehler simuliert werden kann. Der Typ der Außenschnittstelle definiert von vornherein, welche Störung simuliert, beziehungsweise Fehler injiziert werden können und sollen, um den Benutzer dabei zu unterstützen, welche Szenarien sinnvollerweise bei der Fehlersimulation berücksichtigt werden sollen.

Zur Unterstützung des Benutzers kann der Antriebszwilling 101 weiterhin eine API (englisch für Application Programming Interfaces oder zu Deutsch: Programmierschnittstelle) aufweisen.

Die API kann beispielsweise derart ausgebildet sein, dass sie umgebende Systeme in die Berechnung der Ausfallwahrscheinlichkeit (und deren Zwischenergebnisse) mit einbeziehen kann.

In einer zweckdienlichen Ausführung ist der Antriebszwilling 101 mit einem Algorithmus ausgestattet, der die Ermittlung der Ausfallwahrscheinlichkeit und aller damit verbundenen Zwischenergebnisse (Bauteilbelastung, Lebensdauerverbrauch, ...) ermöglicht.

Der Antriebszwilling 101 und das Umgebungsmodell 114 werden beispielsweise in einem von dem Rechensystem 103 umfassten Simulationstool zu einem Gesamtmodell 116 - einem Modell des Gesamtsystems 115 - verknüpft.

Das Gesamtmodell 116 wird nun (vom Rechensystem 103) ausgeführt, um das Verhalten des Gesamtsystems 115 zu simulieren. Das Rechensystem 103 kann auch so ausgeführt sein, dass das Gesamtmodell 116 zerteilt oder auch parallel gerechnet wird (siehe FMI Spec: Distributed co-simulation infrastructure). Dabei werden Simulations-Eingangssignale 117 vorgegeben und Simulations-Ausgangssignale 118 betrachtet und analysiert.

Darüber hinaus wird beim Ausführen des Gesamtmodells 116 zumindest eine Störung 105, 107, 108 des Antriebs 102 mitsimuliert, um das Verhalten des Gesamtsystems 115 unter Einfluss der auf den Antrieb 102 wirkenden Störung 105, 107, 108 zu simulieren und Simulationsdaten zu erhalten.

Mit anderen Worten, es wird Störverhalten des realen Gesamtsystems 115 untersucht.

Um Reaktion des realen Gesamtsystems 115 auf eine oder mehr vorgegebenen Störungen 105, 107, 108 zu untersuchen, können beim Antriebszwilling 101 die Simulations-Eingangssignale 117 mit einer Störfunktion 110 beaufschlagt werden, die externen Störungsfunktionen 111 ausgelöst werden, die internen Störfunktionen 112 ausgelöst werden oder eine beliebige Kombination dieser Störungssimulationen - dies führt zu einer umfangreichen Untersuchung der möglichen Störungen - aktiviert werden.

Hierzu können ein oder mehr der vorgenannten Störeingängen des Antriebszwillings 101 verwendet werden.

Im Zuge der Simulation werden Simulationsdaten 119 erzeugt. Diese Daten 119 werden anschließend analysiert 120, um eine zu erwartende Wirkung 121 der Störung 105, 107, 108 auf das Gesamtsystem 115 zu ermitteln.

Dabei können aus den Simulationsdaten 119 detaillierte Analysedaten zum Wirkweg 121 der simulierten Störung 122 abgeleitet werden. Mit anderen Worten wird dabei die Wirkung 121 entlang der Strecke ermittelt, entlang der sich die Störung ausbreitet und sowohl Einzelfehler in Komponenten als auch Folgefehler in anderen Komponenten oder im Antriebszwilling 101 umfassen kann. Mit anderen Worten kann bei Simulation eine Störungskaskade i), ii), iii) die mehrere Störungen und Folgestörungen umfasst, untersucht werden. Dabei können die Analysedaten zum Wirkweg 121 eine Abschätzung von Fehlerwechselwirkungen, Folgefehlern, oder Fehlerkaskaden ermöglichen.

Somit kann mit Hilfe des (gleichen) Antriebszwillings 101 eine Fehlersuche im Feld unterstützt werden. Fehler aus dem Feld (aufgrund von Störungen 105, 107, 108) werden mit dem Antriebszwilling 101 nachstellen (durch Aufschalten der simulierten Störungen 110, 111, 112). Dabei kann ermittelt werden, ob sich die Felderfahrung mit dem Simulationsverhalten des Antriebszwillings 101 deckt. Dabei kann beispielsweise KI-gestützt eine Zuordnung der Fehler in Datenbank mit Wahrscheinlichkeiten und/oder Austausch von Komponenten vorgeschlagen werden.

Die zu inkludierenden Fehlerzustände und Wirkmechanismen können identifiziert werden beispielsweise anhand von einem oder mehr von Normen, Erfahrungswerte, Überdimensionierung, Sicherheitsfaktoren und FMEA, die in einem Datenspeicher des Rechensystems 103 vorliegen können.

Dadurch dass der Antriebszwilling 101 einen oder mehr Störeingänge aufweisen kann, können Fehlerzustände in dem Antriebszwilling 101 (und in seiner Einzelkomponenten) separat angesteuert werden.

Beim Analysieren der Simulationsdaten 119 kann eine Beurteilung hinsichtlich Gefährlichkeit bzw. Kritikalität einer Situation durchgeführt werden, die durch die zu erwartende Wirkung 121 der Störung 105, 107, 108 auf das Gesamtsystem 115 zu erwarten ist. Dies kann auf Basis der sicherheitsrelevanten Parameter und/oder zu erwartenden Zustandes des Gesamtsystems 115 o.Ä. durchgeführt werden. Das Ergebnis der Beurteilung kann beispielsweise einem Benutzer gemeldet werden.

Mit anderen Worten werden die Simulationsdaten 119 hinsichtlich gefährlicher Fehler untersucht, gefährliche Szenarien und auch Maßnahmen, um solche Szenarien zu vermeiden, ermittelt.

Beispielsweise kann beim Analysieren der Simulationsdaten 119 eine Simulation des Gesamtsystems 115 in einem ungestörten Zustand herangezogen wird. Dabei wird der Antrieb 102 in der Umgebung 113 sowohl in dem ungestörten Zustand als auch unter Einfluss der Störung 105, 107, 108 simuliert. Die Ergebnisse der Simulation des Antriebs 102 ohne Störung werden mit den Ergebnissen der Simulation des Antriebs unter Einfluss der Störung 105, 107, 108 dabei verglichen und analysiert.

Dies kann beispielsweise im Rahmen eines Postprocessing und/oder einer Merkmalsextraktion der Simulationsdaten erfolgen. Dabei kann z.B. geprüft werden, ob ein Ausgang des Antriebszwillings 101 an Anschlag gegangen ist, und ob wodurch ein z.B. ein kritischer Fehler verursacht wurde.

Diese Gefährlichkeit bzw. Kritikalität der Störaufschaltung kann mittels mehrerer Durchläufe der Simulation ermittelt werden.

Bei jedem Durchlauf können verschiedene Störszenarien 123 simuliert werden. Als ein Störszenario wird eine konkrete simulierte Störung 110, 111, 112 oder eine konkrete Kombination der simulierten Störungen 110, 111, 112 bezeichnet.

Z.B. bei drei beschriebenen Störmechanismen kann es n Störszenarien 123 geben, wobei n von ni abhängig ist, wobei ni die Anzahl der möglichen Störungen des i-ten Mechanismus ist, z.B. der Komponenten, die ausfallen können. Fallen dabei zwei Komponenten aus, ist dies eine 2-fache Störung des Störmechanismus *"*Ausfall*"*, usw.

Jede simulierte Störung 122 (gewählt aus n Störszenarien 123) kann einen Fehlerzustand hervorrufen. Insofern kann bei Aufschaltung einer Störung 110, 111, 112 von einer Fehlerinjektion gesprochen werden.

Der Antriebszwilling 101 kann unterschiedliche Detailstufen in Bezug auf Fehlerzustände haben, damit von außen nicht alle Schnittstellen / Parameter bedient werden müssen. Das ausgewählte Modell im Antriebszwilling 101 kann z.B. in der API, die als Alternative zu FMI vorgesehen sein kann, an den Benutzer kommuniziert werden.

So ist es beispielsweise möglich, dass im Auslegungsprozess andere Daten verfügbar sind wie in der Betriebsphase (beispielsweise lassen sich Strom- oder Spannungsoberschwingungen oberhalb des halben Abtasttakts der Strom- oder Spannungssensoren im Betrieb nicht ohne separates Messsystem identifizieren (Shannon-Theorem), in der Auslegungsphase hingegen schon). Gegebenenfalls lassen sich Teile des Antriebszwillings 101 benutzen, um auf fehlerzustandsrelevante Größen zu schließen (virtueller Sensor für Störgrößenübertragungsfunktion) .

Es kann vorgesehen sein, dass ausgewählte Fehlerzustände von Subkomponenten eines des Antriebszwillings 101 sich gegenseitig beeinflussen und auch ohne die gezielte Auswahl von außen eine Detaillierung eines Subsystems zulassen, um Folgefehler ermitteln zu können.

Der Antriebszwilling 101 ist vorzugsweise so gestaltet, dass abhängig von der Fragestellung der Detailgrad der Teilkomponenten automatisch gewählt werden kann, beziehungsweise dass der manuell vorgegebene Detailgrad einer Teilkomponente seine benachbarten Komponenten beeinflusst, um hierdurch eine Konsistenz hinsichtlich der Genauigkeit des Abbilds eines Fehlers sicherzustellen.

Beim *"*Durchprobieren*"* verschiedener Störszenarien 123 wird Wissen über Wirkwege 121 der Störungen und somit über die möglichen Störmechanismen generiert und beispielsweise in einem dafür vorgesehenen Speicher 124 abgespeichert.

Wenn ein Störszenario 123 zu einem Fehler führt, ist es ein Fehlerszenario.

Basierend auf der ermittelten, zu erwartenden Wirkung 121 der zumindest einen Störung 105, 107, 108 auf das Gesamtsystem 115, beziehungsweise auf dem generierten Wissen über die Störmechanismen wird eine oder mehr Maßnahmen beziehungsweise Modifizierungen ermittelt, die innerhalb des Antriebszwillings 101 vorgenommen werden können und ermöglichen die zu erwartende Wirkung 121 zumindest teilweise zu kompensieren.

Beispielsweise kann die Modifizierung bei einem internen Fehler 107, der das Versagen einer internen Komponente des Antriebs 102 umfasst und durch Löschung bzw. Deaktivierung zur Laufzeit 112 einer entsprechenden Komponente im Antriebszwilling 101 simuliert wird, einen Überwachungsmechanismus vorsehen, der das Versagen der Komponente detektiert und den Antriebszwilling 101 in einen robusteren Zustand überführt, in dem die Wirkung 121 zumindest teilweise kompensiert wird, beispielsweise kein Ausgang des Antriebszwillings 101 an Anschlag geht.

In einer vorteilhaften Ausgestaltung, wenn die zu erwartende Wirkung 121 einen oder mehr Fehler innerhalb des Gesamtmodells 116 umfasst, ermittelt das Rechensystem 103 anhand der Simulationsdaten 119 und insbesondere anhand der detaillierten Analysedaten 121 zum Wirkweg eine Lösung innerhalb des Antriebszwillings 101 ermittelt wird, wobei die eine Lösung das Gesamtmodell 116 (oder seine Simulation) in einen sichereren Zustand überführt, indem sie beispielsweise den einen oder mehr Fehler zumindest teilweise kompensiert, insbesondere derart, dass ein oder mehr Folgefehler vermieden werden oder ihre Gefährlichkeit bzw. Kritikalität verringert wird.

Entsprechend kann das Verhaltensmodell 104 des Antriebszwillings 101 um eine solche Maßnahme beziehungsweise mit einer solchen Modifizierung angepasst werden 125.

Mit anderen Worten kann die Modifizierung darauf abzielen, Folgen einer simulierten Störung 110, 111, 112, oder eines simulierten Störungsszenario 123 zu verringern und somit Folgestörungen zu vermeiden.

Eine Lösung beziehungsweise Lösungsszenario kann ein oder mehr der Störungsszenarien 123 betreffen.

Beispielsweise können für n Störszenarien 123 m Lösungsszenarien ermittelt werden und m < n sein. Die Lösungsszenarien können dabei eine oder eine Kombination von folgenden Maßnahmen umfassen: Kompensation der zu erwartenden Wirkung, Überführung in einen sicheren Zustand, Notaus, Anpassung der Wartungsintervalle usw.

Diese m Lösungsalternativen können anschließend getestet werden, wobei bei der Verifikation der Lösungsalternativen ein Scoring 130 eingeführt werden kann, wenn die entsprechende Lösung gut genug wirkt. Dabei können Bewertungsfaktoren wie z.B. kostenabhängig, größere Sicherheit, Umsetzbarkeit, etc. in Betracht kommen.

Beim Scoring 130 kann beispielsweise einem Lösungsszenario eine Kennzahl zugeordnet werden, die die Robustheit quantifizieren. Dies kann z.B. basierend auf einem Abstandsmaß zu dem ungestörten Signal erfolgen und Unterdrückung der Störung, etc. charakterisieren.

Ins echte System wird vorzugsweise eine einzige (optimale) Lösung übertragen beziehungsweise validiert.

Insbesondere kann die Maßnahme darin bestehen, dass die Gefährlichkeit der in dem gewählten Störungsszenario entstandenen Situation verringert wird.

Die Modifizierung kann in den Antriebszwilling 101 übertragen werden. Dies führt zu einem hinsichtlich seiner Robustheit gegenüber der bekannten vorgenannten Störszenarien verbesserten Antriebszwilling 126 mit einem geänderten Verhaltensmodell 127.

Der modifizierte Antriebszwilling 126 ist robuster als der Antriebszwilling 101.

Der modifizierte Antriebszwilling 126 kann beispielsweise im Speicher 124 gespeichert werden.

In einer zweckdienlichen Ausgestaltung der Einrichtung 100 schlägt das Rechensystem 103 basierend auf dem modifizierten Antriebszwilling 126 und insbesondere auf dem geänderten Verhaltensmodell 127 eine Änderung des Antriebs 102 vor 128.

Die ermittelte Maßnahme kann anschließend am Gesamtsystem 115 verifiziert werden. Hierzu wird das Gesamtmodell 116 dadurch geändert, dass es das (alte) Umgebungsmodell 114 und den modifizierten Antriebszwilling 126 umfasst. Das Rechensystem 103 führt anschließend das geänderte Gesamtmodell aus, wobei beim Ausführen des geänderten Gesamtmodells die(selbe) Störung des Antriebs 102 mitsimuliert wird, die zu der vorgenannten Änderungsmaßnahme des Antriebszwillings 101 geführt hat. Die erhaltenen Simulationsergebnisse werden an dem Gesamtsystem validiert 129.

Die oben beschriebene Einrichtung 100 kann somit auch zum Testen des Antriebs 102 in der Umgebung 113 verwendet werden.

Das im Rahmen der oben beschriebenen Simulation gewonnene Wissen 124 über verschiedene Störmechanismen und aus diesem Wissen 124 abgeleitete Lösungen können zum Modifizieren des Antriebs 102 verwendet werden.

Dies ist insbesondere im Rahmen einer Auslegung des Antriebs 102 nützlich. Hierfür kann das vorgenannte Simulationstool im Rechensystem 103 eine Komponente eines Auslegungstool sein oder als Auslegungstool ausgebildet sein.

Es versteht sich, dass das Simulations-, Auslegungstool mit dem Speicher 124 und mit anderen hier der Einfachheit halber nicht gezeigten Komponenten des Rechensystems 103 auf herkömmliche Weise interagieren kann.

Zusammenfassend zielen die vorliegend offenbarten Verfahren und Systeme insbesondere auf die Ermittlung konstruktiver und/oder regelungstechnischer (bspw. Begrenzung von Anstiegszeiten, Reglerfaktoren, Limiter...) und/oder überwachungstechnischer Eingriffe beim Versagen des Antriebssystems 102 oder mit anderen Worten auf Fehleranalyse und -beherrschung im Antriebssystem 102 ab. Dabei werden Reaktionen definiert, die beim Versagen vom Antriebssystem 102 realisiert werden, um die fatalen Fehler zu vermeiden, mit dem Vorteil, dass diese Reaktionen zunächst im Antriebszwilling 101 simuliert werden können. Beispiele dafür sind, wenn ein Sensorsignal fehlt, dann wird eine Stützbremse getätigt, Anpassung eines Serviceintervalls, z.B. beim frühzeitigem Versagen o.Ä.

Die Aufgabe dieser Beschreibung besteht lediglich darin, veranschaulichende Beispiele bereitzustellen und weitere Vorteile und Besonderheiten dieser Erfindung anzugeben. Somit kann sie nicht als Einschränkung des Anwendungsgebiets der Erfindung beziehungsweise der in den Ansprüchen beanspruchten Patentrechte interpretiert werden. Insbesondere können die im Zusammenhang mit den hier beschriebenen Verfahren offenbarte Merkmale sinnvollerweise zur Weiterbildung der hier beschriebenen Systeme eingesetzt werden und *vice versa.*

## Patentansprüche

1. Computergestütztes Verfahren zum Optimieren eines digitalen Zwillings eines Systems (102) - eines Systemzwillings (101) - hinsichtlich seiner Robustheit, wobei der Systemzwilling (101) ein Verhaltensmodell (104) umfasst, welches sowohl ein ungestörtes Verhalten als auch ein Verhalten des Systems (102) beschreibt, welches unter Einfluss einer oder mehr vordefinierten Störungen (105, 107, 108) zu erwarten ist,
wobei bei dem Verfahren
- ein Modell einer Umgebung (113) - ein Umgebungsmodell (114) - bereitgestellt wird, wobei das System (102) dazu ausgebildet ist, mit der Umgebung (113) derart zu interagieren, dass die Umgebung (113) zumindest ein Eingangssignal (106) dem System (102) zuführt und zumindest ein Ausgangssignal (109) von dem System (102) empfängt, wobei das System (102) mit der Umgebung (113) gemeinsam ein Gesamtsystem (115) bilden,
- der Systemzwilling (101) und das Umgebungsmodell (114) zu einem Gesamtmodell (116) - einem Modell des Gesamtsystems
- verknüpft werden,
- das Gesamtmodell (116) mindestens zweimal ausgeführt wird, um Simulationsdaten (119) zu erhalten, wobei bei einem ersten Ausführen das Gesamtmodell (116) in einem ungestörten Zustand herangezogen wird und bei einem zweiten Ausführen des Gesamtmodells (116) zumindest eine Störung (105, 107, 108) des Systems (102) mitsimuliert wird, um das Verhalten des Gesamtsystems (115) unter Einfluss der auf das System (102) wirkenden Störung (105, 107, 108) zu simulieren,
- Simulationsdaten (119) analysiert werden, um eine zu erwartende Wirkung (121) der zumindest einen Störung (105, 107, 108) auf das Gesamtsystem (115) aus einem Vergleich von bei dem ersten Ausführen des Gesamtmodells (116) ermittelten Daten mit bei dem zweiten Ausführen des Gesamtmodells (116) ermittelten Daten zu ermitteln,
- abhängig von der zu erwartenden Wirkung (121) zumindest eine Handlung ermittelt und an einen Benutzer kommuniziert wird.

2. Verfahren nach Anspruch 1, wobei beim Ermitteln der zumindest einen Handlung eine durch die zu erwartende Wirkung (121) der zumindest einen Störung (105, 107, 108) auf das Gesamtsystem (115) zu erwartenden Situation bestimmt wird und eine beispielsweise risikobasierte Bewertung der Situation durchgeführt wird.

3. Verfahren nach Anspruch 1 oder 2, wobei die zumindest eine Handlung hinsichtlich vorgebbarer Parameter bewertet wird.

4. Verfahren nach einem der Ansprüche 1 bis 3, wobei zwei oder mehr Störungen (105, 107, 108) des Systems (102) mitsimuliert werden, um das Verhalten des Gesamtsystems (115) unter Einfluss der auf das System (102) wirkenden zwei oder mehr Störungen (105, 107, 108) zu simulieren und Simulationsdaten (119) zu mehreren Störszenarien zu erhalten.

5. Verfahren nach Anspruch 4, wobei die zu erwartende Wirkung (121) für jedes Störszenario ermittelt wird, wobei zumindest eine Handlung für eine oder mehr der zu erwarteten Wirkungen (121) ermittelt und an den Benutzer kommuniziert wird.

6. Verfahren nach einem der Ansprüche 1 bis 5, wobei die Handlung ein derartiges Verändern des Verhaltensmodells (114) des Systemzwillings (101) umfasst, dass die zu erwartende Wirkung (121) vermindert wird.

7. Verfahren nach Anspruch 6, wobei basierend auf dem geänderten Verhaltensmodell (127) zumindest eine entsprechende Änderung des Systems (102) vorgeschlagen wird.

8. Verfahren nach Anspruch 6 oder 7, wobei
- das Gesamtmodell (116) derart geändert wird, dass es das Umgebungsmodell (114) und den Systemzwilling (126) mit dem geänderten Verhaltensmodell (127) umfasst,
- das geänderte Gesamtmodell ausgeführt wird, wobei beim Ausführen des geänderten Gesamtmodells die Störung des Systems mitsimuliert (110, 111, 112) wird, und dadurch erhaltene, geänderte Simulationsergebnisse an dem Gesamtsystem validiert (129) werden.

9. Verfahren nach Anspruch 8, wobei beim Validieren ein Ranking der an dem Verhaltensmodell (114) des Systemzwillings (101) vorgenommenen Änderung durchgeführt wird.

10. Verfahren nach Anspruch 9, wobei das Ranking eine Gewichtung hinsichtlich einer Effizienz der Änderung und/oder des Aufwands einer Umsetzung der Änderung an dem System (102) und/oder der Kosten einer Umsetzung der Änderung an dem System (102) umfasst.

11. Verfahren nach einem der Ansprüche 1 bis 10, wobei beim Systemzwilling den vordefinierten Störungen korrespondierende Störeingänge vorgesehen sind.

12. Verfahren zum Auslegen zumindest eines Antriebssystems (102), wobei ein digitaler Zwilling des Antriebssystems - ein Antriebszwilling (101) nach einem Verfahren nach einem der Ansprüche 1 bis 11 optimiert wird und das Antriebssystem (102) gemäß dem optimierten Antriebszwilling (126) ausgelegt wird.

13. Einrichtung zum Optimieren eines digitalen Zwillings eines Systems (102) - eines Systemzwillings (101) - hinsichtlich seiner Robustheit, wobei die Einrichtung (100) das System (102), eine Umgebung (113) des Systems (102) und ein Rechensystem (103) umfasst, wobei das Rechensystem (103) ausgebildet und konfiguriert ist, ein Verfahren nach einem der Ansprüche 1 bis 11 auszuführen.

14. Computerprogrammprodukt für eine Einrichtung nach Anspruch 13, wobei das Computerprogrammprodukt Befehle umfasst, die, wenn sie durch ein Rechensystem (103) der Einrichtung (101) ausgeführt werden, die Einrichtung (101) dazu veranlassen, das Verfahren nach einem der Ansprüche 1 bis 11 oder 12 auszuführen.
